# EUROPEAN PATENT APPLICATION

(11) **EP 1 619 911 A1**
(43) Date of publication of application: **25.01.2006**
(21) Application number: 05290167.5
(22) Date of filing: 25.01.2005
(51) Int. Cl.: H04Q 7/34, H04B 17/00

(54) **Method of obtaining and transmitting user-specific maintenance data related to radio transmission in a wireless network**

(30) Priority: 19.07.2004 EP 04291844
(71) Applicant: Axalto SA, 92120 Montrouge (FR)
(72) Inventor: Fargues, Pierre, c/o Axalto S.A., 92120 Montrouge (FR)
(74) Representative: Jacquot, Ludovic R. G.

(57) **Abstract**

The network includes a central network server (10) and a plurality of mobile stations (20), each mobile station (20) including a mobile equipment (22) and a user-specific module (24). Radio communication (30) takes place between the network server and the mobile equipment after authentication from the user module. The method includes successive steps of:
a) issuing by the user module (24) a request for obtaining maintenance data,
b) transmitting said request from the user module to the mobile equipment,
c) obtaining maintenance data by the mobile equipment,
d) transmitting said maintenance data from the mobile equipment to the user module,
e) processing said maintenance data within the user module (24), e.g. updating a log record and/or checking maintenance data over predetermined transmission quality criteria, in particular for
f) transmitting said processed data (MESSAGE/ALERT) from the user module to the mobile equipment, typically in the form of a SMS, and
g) remotely transmitting said processed data (MESSAGE/ALERT) from the mobile equipment to the network server, in particular for correcting radio transmission parameters of the wireless network.

## Description

### BACKGROUND OF THE INVENTION

### Field of the invention

The present invention generally relates to the collection and transmission of maintenance data in wireless networks.

The invention will be principally described in the case of third-generation cellular telephone networks such as UMTS networks, but such application is not restrictive and the invention may as well be used within other kinds of wireless networks, either telephone networks or not, whenever the terminal makes use of a user-specific module enabling the identification and authentication of the user of the terminal.

Further, the term "module" should be understood as encompassing not only physically separable modules, such as e.g. SIM or USIM cards used in cellular phones, but purely logical modules as well, such as a piece of software and associated file embedded in a PC to proceed with so-called "one-time password" authentication of an the end-user as used in e.g. WLANs.

### Background art

In wireless networks, there exists a need of supervising the radio transmission between the server and the terminals. To this respect, the "maintenance data" as mentioned in the present description are data related to radio resources, for instance the level of the radio field at different locations within the cells of a cellular network, the level of the signal received by the terminal, the rate of detected errors resulting from poor radio transmission, etc.

Such data may be collected and analysed in order to optimise the overall management of the network by detecting and correcting deficiencies thereof, for instance by adjusting the respective power level of the cells of the network.

A first solution is to make computer simulations from local measurements previously made by specific terminals, in order to get a map of the reception levels in the various cells depending on the position and power levels of the base stations.

Besides, in the case of UMTS networks, there exists a specific protocol enabling collection of such data (localisation, transmission/reception levels, etc.), directly from the terminals of the users.

This protocol is described in specification *3GPP TS 25.331* and is called "RRC Protocol". Thanks to this protocol the remote, central server may control the terminals so that they generate a report message according to given criteria such as time, reception threshold, etc. This procedure enables the obtaining of a network map directly via the terminals of the users.

Such a procedure nevertheless requires full collection of data from user terminals in order to get information about the overall network. It is a network-oriented approach, which purpose is to analyze the quality of the network as a whole and if needed modify the distribution of the radio transmission power amongst the cells in view of a better, global improvement of the network coverage.

### SUMMARY OF THE INVENTION

It is an object of the invention to provide another method of collecting and transmitting maintenance data according to a different, user-oriented approach, namely a method adapted to locally improve network coverage in case a specific user encounters difficulties due to low reception level, high error rate, etc.

It is therefore an object of the invention to provide a method of obtaining and managing maintenance data that may increase the satisfaction of a given client using his/her terminal in a specific situation and location within the network.

More specifically, the invention relates to the obtaining and transmitting of maintenance data related to radio transmission in a wireless network including a central network server and a plurality of mobile stations, each mobile station including a mobile equipment and a user-specific module, wherein radio communication takes place between the network server and the mobile equipment after authentication from the user module.

According to the invention, the method includes the successive steps of:
a) issuing by the user module a request for obtaining maintenance data,
b) transmitting said request from the user module to the mobile equipment,
c) obtaining maintenance data by the mobile equipment,
d) transmitting said maintenance data from the mobile equipment to the user module,
e) processing said maintenance data within the user module, thus providing processed data,
f) transmitting said processed data from the user module to the mobile equipment, and
g) remotely transmitting said processed data (MESSAGE/ALERT) from the mobile equipment to the network server.

Processing step e) may in particular include updating a log record of maintenance data, in particular a log record stored within the user module, and/or checking maintenance data over predetermined transmission quality criteria. Specifically, maintenance data may be compared to at least one threshold and issuing an alarm signal whenever said threshold is reached, said processed data including said alarm signal.

Processing step e) preferably includes formatting said processed data into a standard message such as a SMS message.

The method may also include further steps of:
h) analyzing by the network server said processed data remotely transmitted, and
i) correcting by the network server at least one radio transmission parameter of the wireless network as a function of said processed data.

### BRIEF DESCRIPTION OF THE DRAWINGS

The foregoing and other objects, aspects and advantages of the invention will be better understood from the following detailed description of a preferred embodiment of the invention with reference to the appended drawings, in which the same numerals refer to identical or functionally similar features over the different figures.
Figure 1 is a schematic view of a communication taking place according to prior art method of managing maintenance data in a wireless network.
Figure 2 illustrates the different parts of a wireless network, including radio cells, terminals and remote central sites.
Figures 3 to 6 are schematic illustrations of the successive steps of the exchange of information involved in the method of the invention.

### DETAILED DESCRIPTION OF A PREFERRED EMBODIMENT OF THE INVENTION

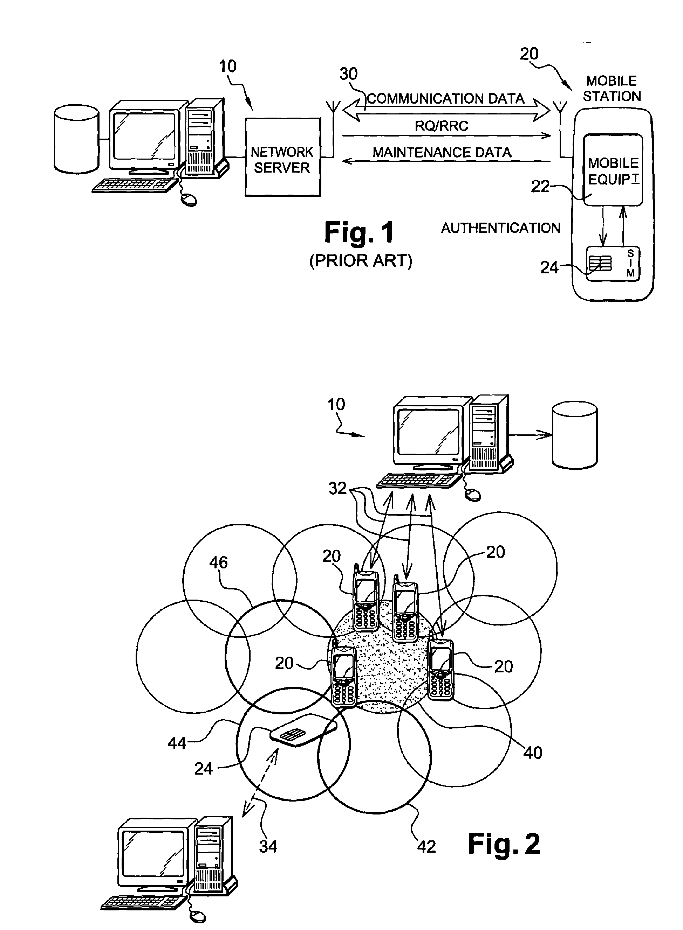

Referring now to the drawings, Figure 1 generally illustrates the basic elements of a wireless network, e.g. a UMTS cellular network, though the invention is not limited to such specific type of network.

The network includes a central network server 10 exchanging information with the terminals or "mobile stations" 10 via communication link 30. The "mobile station" 10 itself includes a "mobile equipment" 22, which is the radio terminal used for radio communication between the user and the server, combined to a user-specific module 24 (hereafter "module" or "user module") which is typically a chip card of the USIM type as defined by UMTS specifications.

Functionally, module 24 is a security module inserted in the mobile station 20 that allows identification of the user (subscriber) in the network. Module 24 is typically a microprocessor-based chip card that holds the subscriber identity, may perform authentication algorithms and store authentication and encryption keys and some subscription information needed at the terminal for proper operation in the network.

In wireless networks such as UMTS networks, there is provided a specific protocol that enables collection of maintenance data related to the quality of radio transmission including localisation, reception level, rate of transmission errors, etc. Under UMTS specification *3GPPTS 25.331,* this is so-called "RRC protocol" according to which a request is sent as input to the mobile equipment 22, which results in the collection of requested data which are provided as output from the mobile equipment.

As shown in Figure 1, in known networks the RRC request according to UMTS protocol (referred to as "RQ/RRC") is sent by the network server 10 to the mobile station via the radio communication link 30, then the maintenance data (referred to as "MAINTENANCE DATA") obtained by the mobile equipment 22 are sent back to the network server 10 via the same radio communication link 30.

As schematically shown in Figure 2, by collecting maintenance data from a plurality of mobile stations 20 (as shown by links 32) server 10 may make up a global map of radio reception conditions prevailing in cells 42, 44, 46, ... of the network.

The novel method of the invention basically lies in the user-specific module 24 being used in the process of collecting maintenance data, as opposed to prior art method where this module was essentially used for identification and authentication purposes, but not for management of radio resources of the network.

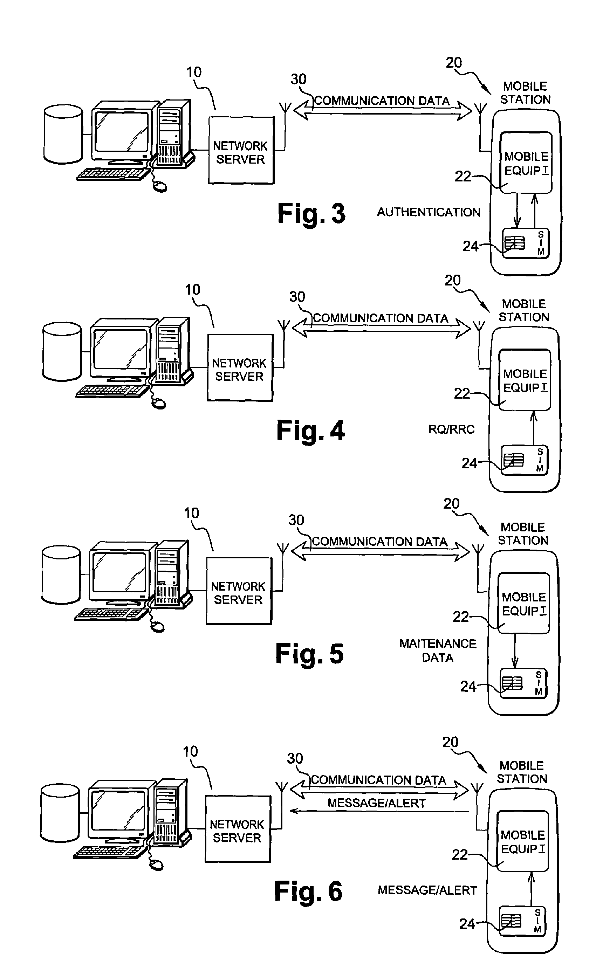

Figures 3 to 6 illustrate the successive stages of data exchange in the method of the invention.

The first stage, as shown in Figure 3, is a preliminary authentication of the user in the network through security module 24, by means of protocols described in e.g. UMTS specifications.

The second stage, is shown in Figure 4, consists in applying to the mobile equipment 22 a request RQ/RRC. This request is typically a request according to RRC protocol specified by UMTS specification for getting maintenance data from the mobile equipment.

In a way which is unique to the invention, this RQ/RRC request is generated by the user module 24 and applied to the mobile equipment 22 by the user module 24, instead of being remotely applied by the network server as in the prior art method. Nevertheless, the request is of the same type as in the prior art (namely it is a RRC-type request applied to the mobile equipment), which enables using the existing ability of mobile equipments to collect and deliver maintenance data upon application of a specific request.

As shown in Figure 5, in response to the application of the RRC request, mobile equipment 22 issues maintenance data (referred to as "MAINTENANCE DATA"), which are sent back to user module 24. These data are then processed within the chip of user module 24. Through a specific filtering, namely by comparing to predetermined criteria the maintenance data collected, module 24 may create and update a "subscriber profile" that can be stored within the user module as a log record of maintenance data read from the mobile equipment.

The module may also analyze these data in order to issue an alarm signal when a given threshold is reached, for instance in case of an excessive rate of transmission errors.

As shown in Figure 6, the result of the processing of maintenance data by user module 24 (referred to as "MESSAGE/ALERT") is sent to remote network server 10. This sending may be controlled either from the server side (which "pulls" the information from the mobile station) or from the mobile station side (which "pushes" the information to the server).

Preferably, the data processed by user module 24, either maintenance data ("MESSAGE") or alert signals ("ALERT"), are sent to the server in the form of standardised messages after suitable formatting, for instance in the form of SMS messages.

The sending of information from mobile station 20 to network server 10 may be triggered at regular intervals and/or conditionally, depending of specific rules, e.g. once a low reception level is detected or an excessive rate of transmission errors is found.

Once maintenance data have been received from the mobile station, the remote server may take appropriate action in order to improve the situation of the user.

For instance, in case of an excessive rate of transmission errors resulting in the transmission of an alert from the mobile station to the server, the server may modify the radio power level in the cell(s) in order to improve reception by the user. Such a situation may typically occur when a user is located at the boundaries of several cells, as it is the case with terminal 20 shown at bottom left in Figure 2: the level in cell 40 being not enough to ensure proper reception by this mobile station, in response to the alert message the server may increase the radio transmission level of neighbouring cells 42, 44 and 46 in order to improve reception by this specific terminal.

Such action is made possible by involvement of the user module 24 in the collection and analysis of maintenance data, which is symbolized by link 34 in Figure 2, as opposed to links 32 of prior art radio management methods, which could just detect wrong operation in a given cell, but could not control the network in order to improve the specific situation for a given user during operation of the network.

## Claims

1. A method of obtaining and transmitting maintenance data related to radio transmission in a wireless network, said network including a central network server (10) and a plurality of mobile stations (20), each mobile station (20) including a mobile equipment (22) and a user-specific module (24), wherein radio communication (30) takes place between the network server and the mobile equipment after authentication from the user module, said method being **characterised by** the successive steps of:
a) issuing by the user module (24) a request (RQ/RRC) for obtaining maintenance data,
b) transmitting said request (RQ/RRC) from the user module (24) to the mobile equipment (22),
c) obtaining maintenance data by the mobile equipment (22),
d) transmitting said maintenance data (MAINTENANCE DATA) from the mobile equipment (22) to the user module (24),
e) processing said maintenance data within the user module (24), thus providing processed data,
f) transmitting said processed data (MESSAGE/ALERT) from the user module (24) to the mobile equipment (22), and
g) remotely transmitting said processed data (MESSAGE/ALERT) from the mobile equipment (22) to the network server (10).

2. The method according to claim 1, wherein processing step e) includes updating a log record of maintenance data.

3. The method according to claim 2, wherein said log record of maintenance data is stored within the user module (24).

4. The method according to claim 1, wherein processing step e) includes checking maintenance data over predetermined transmission quality criteria.

5. The method according to claim 4, wherein processing step e) includes comparing maintenance data to at least one threshold and issuing an alarm signal whenever said threshold is reached, said processed data including said alarm signal.

6. The method according to claim 1, wherein processing step e) includes formatting said processed data into a standard message.

7. The method according to claim 6, wherein said standard message is a SMS message.

8. The method according to claim 1, comprising further steps of:
h) analyzing by the network server (10) said processed data remotely transmitted, and
i) correcting by the network server (10) at least one radio transmission parameter of the wireless network as a function of said processed data.
